Europäisches Patentamt

European Patent Office

Office européen des brevets

(19)

(11) Veröffentlichungsnummer: **0 220 438**
**B1**

(12) **EUROPÄISCHE PATENTSCHRIFT**

(45) Veröffentlichungstag der Patentschrift:
31.05.89

(21) Anmeldenummer: 86112364.4

(22) Anmeldetag: 06.09.86

(51) Int. Cl.⁴: **G 01 N 1/30**

(54) Stabilisator für Färbelösungen.

(30) Priorität: 20.09.85 DE 3533515

(43) Veröffentlichungstag der Anmeldung:
06.05.87 Patentblatt 87/19

(45) Bekanntmachung des Hinweises auf die Patenterteilung:
31.05.89 Patentblatt 89/22

(84) Benannte Vertragsstaaten:
BE CH DE FR GB IT LI NL

(56) Entgegenhaltungen:
EP-A-0 062 177

(73) Patentinhaber: **MERCK PATENT GESELLSCHAFT MIT BESCHRÄNKTER HAFTUNG, Frankfurter Strasse 250 Postfach 4119, D-6100 Darmstadt (DE)**

(72) Erfinder: **Rieke, Erwin, Dr., Hermannstrasse 12, D-6104 Seeheim (DE)**
Erfinder: **Kaschek, Renate, Rossbergring 63, D-6107 Reinheim 5 (DE)**

**EP 0 220 438 B1**

**Beschreibung**

Die Erfindung betrifft die Stabilisierung von Blutfärbelösungen, die Thiazinfarbstoffe enthalten.

Differentialblutbilder werden seit langem mit den bekannten Färbelösungen nach Giemsa, May-Grünwald, Leishman und Wright erzeugt. Ein wesentlicher Nachteil dieser Färbelösungen besteht darin, daß die Untersuchungsergebnisse aus verschiedenen Laboratorien aufgrund der unterschiedlichen Qualität der im Handel erhältlichen Farbstoffe nicht miteinander verglichen werden können (J.clin.Path. 28, 680 (1975)). Es bestehen nicht nur große Qualitätsunterschiede zwischen den Farbstoffen verschiedener Hersteller, sondern die Farbstoffe unterliegen auch einer zeitlichen chemischen Veränderung. Die genannten Färbelösungen lassen sich wegen der Labilität insbesondere des Methylenblau-Moleküls, das vor allem in alkalischem Milieu durch oxidative Demethylierung in die nächstniederen Homologen Azur A, Azur B, Azur C und Thionin übergeht, nicht in stets gleichbleibender Qualität herstellen und daher auch nicht standardisieren. Aufgrund der geringen Haltbarkeit kommt es dann zu Ausfällungen bei gleichzeitigem Absinken der Färbeleistung. Im wesentlichen verändern sich die Färbeeigenschaften durch eine Abnahme der optischen Dichte der Thiazinkomponenten, die bei etwa 645 nm bestimmt wird. Hierdurch verschiebt sich das Blau-/Rot-Farbverhältnis kontinuierlich, was nach einiger Zeit zu nicht mehr akzeptablen Färbungen führt. Eine Standardisierung, die auf diesem Gebiet aufgrund der zunehmenden Automation unerläßlich ist, kann somit nicht durchgeführt werden.

Man hat nun versucht, durch Zugabe von Stabilisatoren zu den Färbelösungen reproduzierbare Färbeleistung und konstante Farbabsorbierung zu erhalten und weiterhin die Ausfällung zu unterdrücken. Solche Zusätze, die als Stabilisatoren wirken, sind aus EP 49 833, EP 63 293 und EP 83 027 bekannt. Darin werden als Stabilisierungsmittel Ammoniumhalogenide, primäre, sekundäre oder tertiäre Alkylaminhydrohalogenide oder deren Mischungen verwendet, worin das Halogenid Chlorid, Bromid oder Jodid ist. Bevorzugter Stabilisator ist bisher Diethylaminhydrochlorid.

Der Erfindung liegt die Aufgabe zugrunde, Stabilisatoren für Färbelösungen zur Verfügung zu stellen, die eine längere Haltbarkeit garantieren als die genannten Verbindungen, allgemein vergleichbare Ergebnisse aufweisen und in geringen Konzentrationen wirksam sind.

Gegenstand der Erfindung sind somit Färbelösungen, enthaltend Farbstoffe und Stabilisatoren, insbesondere solche, die Thiazinfarbstoffe oder Mischungen aus Thiazinfarbstoffen mit weiteren Farbstoffen enthalten, die dadurch gekennzeichnet sind, daß Dimethylammoniumsulfat als Stabilisator enthalten ist. Solche erfindungsgemäß stabilisierten Färbelösungen finden Verwendung zum Anfärben biologischer Materialien in der Hämatologie, Zytologie und Histologie.

Es wurde gefunden, daß durch den Zusatz von Dimethylammoniumsulfat die Stabilität der Färbelösung stark erhöht wird im Vergleich zu den stabilisierten Lösungen nach dem Stand der Technik. Dies war um so überraschender, da Dimethylammoniumchlorid in EP 49 833 als Stabilisator ausgeschlossen wurde. Als großer Nachteil wurde die starke Niederschlagsneigung bei Verwendung von Dimethylammoniumchlorid als Stabilisator aufgeführt (vgl. J.C. Liao et al., Stain Technology Vol. 56, 251, 1981). Bei den erfindungsgemäßen Lösungen mit Dimethylammoniumsulfat als Stabilisator wurden keinerlei Niederschläge beobachtet.

Eine reine Thiazinfarbstofflösung kann durch den Zusatz von Dimethylammoniumsulfat ebenfalls ausgezeichnet stabilisiert werden. So nimmt z. B. die Extinktion einer 0,1 %-igen Azur B-Lösung bei 40 üC innerhalb von 2 Wochen um 10 % ab, während bei Zusatz von 0,2 % Dimethylammoniumsulfat nur eine Abnahme von 2 % zu verzeichnen ist. Weiterhin wurde überraschenderweise gefunden, daß der Zusatz des Stabilisators die Färbeeigenschaften der Färbelösungen so verbessert, daß eine wesentlich geringere Farbstoffkonzentration zur Erzielung des üblichen Färbeergebnisses ausreicht. So kann z. B. bei der Herstellung einer Wrights Eosin-Methylenblau-Lösung 20 % Farbstoff eingespart werden.

Der Anteil des Stabilisators in der Färbelösung beträgt in der Regel 0,05 bis 1,5 Gew.-%, bezogen auf die Gesamtlösung, vorzugsweise 0,1 bis 0,6 Gew.-%, insbesondere 0,2 Gew.-%.

Zur Haltbarkeit der erfindungsgemäßen Färbelösungen werden Vergleichsversuche durchgeführt.

Bei diesen Versuchen wird eine Probe einer frisch angesetzten May-Grünwald Eosin-Methylenblau-Lösung ohne Stabilisator belassen, einer Probe wird der bisher wirksamste Stabilisator Diethylammoniumchlorid zugesetzt und einer dritten Probe der erfindungsgemäße Stabilisator Dimethylammoniumsulfat.

Die Abnahme der Färbeleistung kann durch das Verhältnis der optischen Dichten 645 nm/523 nm verfolgt werden.

Durch solche Versuche wurde gefunden, daß nach längerer Lagerungszeit die Färbelösungen ohne Stabilisator bzw. mit dem herkömmlichen Stabilisator Diethyl- und Dimethylammoniumchlorid völlig unbrauchbar sind, während die Lösungen mit dem erfindungsgemäßen Dimethylammoniumsulfat noch nach 52 Wochen sehr gute Werte aufweisen.

Somit sind neue stabilisierte Färbelösungen zugänglich, die eine sehr hohe Haltbarkeit aufweisen. Eine weitere Verbesserung liegt darin, daß der Stabilisator in sehr geringen Konzentrationen wirksam ist.

Diese erfindungsgemäß stabilisierten Färbelösungen werden zum Anfärben in der Hämatologie, Zytologie und Histologie verwendet.

2

**Beispiele**

1. Herstellung einer stabilisierten May-Grünwalds Eosin-Methylenblau-Lösung

Man löst 0,1 g Dimethylammoniumsulfat in 100 ml Methanol, stellt auf pH 6,7-7 ein, gibt 0,12 g May-Grünwalds Eosin-Methylenblau (Fa. Merck) zu und rührt eine Stunde. Dann wird die Lösung filtriert.
2. Vergleichsversuche zur Haltbarkeit verschieden stabilisierter Lösungen.

Für das Lagerungsverhalten (bis 40°C) einer nach 1. frisch angesetzten May-Grünwald Eosin-Methylenblau-Lösung (mit jeweils verschiedenen Stabilisatoren, siehe Tabelle 1) werden die Verhältnisse der optischen Dichte (OD) 645 nm/523 nm angegeben.

**Tabelle 1** OD 645 nm/OD 523 nm

| Zeit Wochen | ohne Zusatz | 0,6 % Diethyl-ammoniumchlorid | 0,1 % Dimethyl-ammoniumsulfat |
|---|---|---|---|
| 0 | 1,5 | 1,5 | 1,5 |
| 8 | 1,35 | 1,4 | 1,46 |
| 16 | 1,15 | 1,27 | 1,44 |
| 24 | 1,07 | 1,07 | 1,39 |
| 36 | 1,0 | 1,02 | 1,39 |
| 52 | 0,98 | 1,0 | 1,39 |

Die Abnahme der Färbeleistung beträgt bei den Proben mit 0,6 Gew.-% Diethylammoniumchlorid als Stabilisator nach 16 Wochen bereits 15,4 %, bezogen auf den Ausgangswert.

Nach 24 Wochen ist ein Absinken auf 71,3 % und nach 52 Wochen auf 66,7 % des ursprünglichen Wertes festzustellen, und damit ist die Lösung praktisch unbrauchbar geworden.

Das Dimethylammoniumchlorid ist als Stabilisator völlig ungeeignet, da Farbstoffpräzipitate auftreten.

Im Vergleich dazu ist bei Dimethylammoniumsulfat als Stabilisator eine deutlich geringere Abnahme der Färbeleistung mit nur 4 % nach 16 Wochen und 7,4 % nach 24 Wochen zu verzeichnen.

Bei noch längerer Lagerungsdauer von 36 bzw. 52 Wochen ist bei diesen mit Dimethylammoniumsulfat stabilisierten Färbelösungen kein weiterer Abfall der Färbeleistung zu erkennen, d.h., auch noch nach einem Jahr und mehr können mit diesen Lösungen sehr gute und reproduzierbare Ergebnisse erhalten werden.

Außerdem ist für diese ausgezeichnete Stabilität der Färbelösungen nur 1/6 der Konzentration an Stabilisator notwendig im Vergleich zu Diethylammoniumchlorid enthaltende Lösungen, was ebenfalls eine hervorragende Verbesserung bedeutet.
3. Herstellung einer erfindungsgemäß stabilisierten Leishmans Eosin-Methylenblau-Lösung

Man löst 0,2 g Dimethylammoniumsulfat in 100 ml Methanol, stellt auf pH 6,7 - 7 ein, gibt 0,12 g Leishmans Eosin-Methylenblau (Fa. Merck) zu, rührt 18 Stunden und filtriert dann die Lösung.
(Vergleichsversuch, siehe Tabelle 2)
4. Herstellung einer Färbelösung mit Azur B und Eosin

Man löst 0,2 g Dimethylammoniumsulfat in 100 ml Methanol, stellt auf pH 6,7 - 7 ein und gibt 0,1 g Azur B (Fa. Merck) und 0,12 g Eosin (Fa. Merck) zu. Man rührt 24 Stunden und filtriert die Lösung.
(Meßwerte, siehe Tabelle 2)
5. Herstellung einer Wrights Eosin-Methylenblau-Lösung
> r Man löst 0,2 g Dimethylammoniumsulfat in 100 ml Methanol, stellt auf pH 6,7 - 7 ein, gibt 0,24 g Wrights Eosin-Methylenblau (Fa. Merck) zu und rührt 18 Stunden. Dann wird die Lösung filtriert.
(Meßdaten siehe Tabelle 2)
6. Meßdaten für verschiedene Färbelösungen mit Dimethylammoniumsulfat als Stabilisator

In Tabelle 2 sind Meßdaten (Verhältnisse der optischen Dichten) zum Lagerungsverhalten von verschiedenen, mit Dimethylammoniumsulfat stabilisierten Färbelösungen aufgelistet.

**Tabelle 2** Färbelösungen

| Zeit Wochen | Wright OD 646 nm/523 | | Azur B/Eosin OD 637 nm/523 nm | | Leishman OD 625 nm/523 nm | | May-Grünewald OD 645 nm/523 nm | |
|---|---|---|---|---|---|---|---|---|
| | ohne Zusatz | 0,2 % Dimethylammoniumsulfat | ohne Zusatz | 0,2 % Dimethylammoniumsulfat | ohne Zusatz | 0,2 % Dimethylammoniumsulfat | ohne Zusatz | 0,1 % Dimethylammoniumsulfat |
| 0 | 1,62 | 1,62 | 1,40 | 1,40 | 1,34 | 1,34 | 1,5 | 1,5 |
| 8 | 1,49 | 1,61 | | | 1,26 | 1,34 | 1,35 | 1,46 |
| 16 | | | 1,25 | 1,38 | | | 1,15 | 1,44 |
| 24 | 1,39 | 1,61 | 1,0 | 1,36 | 1,23 | 1,34 | 1,07 | 1,39 |
| 52 | 0,84 | 1,42 | 0,77 | 1,32 | 0,97 | 1,26 | 0,98 | 1,39 |

Bei allen mit Dimethylammoniumsulfat stabilisierten Färbelösungen ist die Färbung nach 1 Jahr noch sehr gut, und es werden reproduzierbare Ergebnisse erhalten.

Analoge Ergebnisse erhält man bei einer Zugabe von z. B. 0,6 g oder 1,5 g Dimethylammoniumsulfat zu den entsprechenden Lösungen.

## Patentansprüche

1. Färbelösungen, enthaltend Farbstoffe und Stabilisatoren, dadurch gekennzeichnet, daß Dimethylammoniumsulfat als Stabilisator enthalten ist.

2. Färbelösungen, enthaltend Thiazinfarbstoffe, dadurch gekennzeichnet, daß Dimethylammoniumsulfat als Stabilisator enthalten ist.

3. Färbelösungen nach Anspruch 1 und/oder 2, dadurch gekennzeichnet, daß der Gehalt an Stabilisator 0,05 bis 1,5 Gew.-% beträgt.

4. Verwendung der Färbelösungen nach den Ansprüchen 1 bis 3 zum Anfärben in der Hämatologie, Zytologie und Histologie.

## Claims

1. Staining solutions containing dyestuffs and stabilizers, characterized in that dimethylammonium sulfate is present as a stabilizer.

2. Staining solutions containing thiazine dyestuffs, characterized in that dimethylammonium sulfate is present as a stabilizer.

3. Staining solutions according to Claim 1 and/or 2, characterized in that the stabilizer content is 0.05 to 1.5 % by weight.

4. Use of the staining solutions according to Claims 1 to 3, for staining in haematology, zytology and histology.

## Revendications

1. Solutions colorantes, contenant des colorants et des stabilisants, caractérisées en ce qu'elles contiennent en tant que stabilisant le sulfate de diméthylammonium.

2. Solutions colorantes, contenant des colorants de thiazine, caractérisées en ce qu'elles contiennent en tant que stabilisant le sulfate de diméthylammonium.

3. Solutions colorantes selon les revendications 1 et/ou 2, caractérisées en ce que la teneur en stabilisant est de 0,05 à 1,5 % en poids.

4. Utilisation des solutions colorantes selon les revendications 1 à 3 pour des colorations en hématologie, en cytologie et en histologie.